# EUROPEAN PATENT SPECIFICATION

(11) **EP 3 681 914 B1**
(45) Date of publication and mention of the grant of the patent: **20.04.2022**
(21) Application number: 18762535.5
(22) Date of filing: 07.09.2018
(51) Int. Cl.: C08F 110/06, C08F 4/654, C08F 4/646

(54) **PROCESS FOR THE PREPARATION OF CATALYST COMPONENTS FOR THE POLYMERIZATION OF OLEFINS**
VERFAHREN ZUR HERSTELLUNG VON KATALYSATORKOMPONENTEN ZUR POLYMERISIERUNG VON OLEFINEN
PROCÉDÉ POUR LA PRÉPARATION DE COMPOSANTS CATALYTIQUES POUR LA POLYMÉRISATION D'OLÉFINES

(30) Priority: 15.09.2017 EP 17191417
(43) Date of publication of application: 22.07.2020
(73) Proprietor: Basell Poliolefine Italia S.r.l., 20121 Milano (IT)
(72) Inventor: BRITA, Diego, 44122 Ferrara (IT); ARICH DE FINETTI, Nicolò, 44122 Ferrara (IT); FUSCO, Ofelia, 44122 Ferrara (IT); GADDI, Benedetta, 44122 Ferrara (IT)
(74) Representative: LyondellBasell
(86) International application number: PCT/EP2018/074086
(87) International publication number: WO 2019/052900

(56) References cited:
- EP-A1- 2 065 087
- EP-A1- 2 251 361
- WO-A1-2009/097398

## Description

### FIELD OF THE INVENTION

The present disclosure relates to a process for the preparation of Ziegler-Natta catalyst components for the (co)polymerization of olefins, in particular propylene, comprising Mg, Ti and halogen elements and optionally at least an electron donor compound.

### BACKGROUND OF THE INVENTION

Industrially used Ziegler-Natta catalyst for the polymerization of olefins, may comprise a solid catalyst component, constituted by a magnesium dihalide on which are supported a titanium compound and optionally an internal electron donor compound which is activated by the contact with an Al-alkyl compound which may be in liquid form.

The preparation of the solid catalyst component may comprise one or more steps in which a Mg compound, which may be a magnesium dichloride or its precursor, is reacted with a titanium compound in the optional presence of an electron donor compound. At the end, the catalytic solid is washed with liquid hydrocarbons and then dried.

Both reaction and washing stages may be carried out in a slurry obtained by suspending a solid in an excess of a liquid phase which may consist of either a liquid titanium compound or a liquid hydrocarbon or both. Then, in the slurry stages, the separation of liquid from the resulting solid catalyst precursor in each successive step is an important aspect. Shortening the removal time allows one to increase productivity and to minimize the contact between the desired products and by-products.

When the slurry step is carried out at a relatively high temperature, it may be that some ingredients, for example the electron donors, may be affected by degradation problems. In these cases, the fast removal of the liquid phase would minimize the degradation process and produce a more reliable catalyst.

WO 03/076480 discloses the preparation of a Ziegler-Natta catalyst through a series of slurry stages in which the removal of the liquid phase occurs by filtration. Although this technique may be efficient in some cases, it also involves additional procedures such as replacement of filter means because they can become clogged or because they need to be changed based on the particle size of the catalyst grade to be produced.

Siphoning is an alternative way to remove the liquid phase of the slurry. In order to be efficient in terms of solid recovery, the siphoning should be done after the solid particles settling is completed. Therefore, the efficiency and productivity of the process strictly depend on the settling time of the solid sedimentation step.

It would therefore be useful to find a way to shorten the settling time of catalyst particles in the slurry while at the same time keeping catalyst performances unchanged.

It has been surprisingly found that the above is obtained when the reaction step with the Ti compound and/or the hydrocarbon washing is carried out in the presence of a specific compound.

### SUMMARY OF THE INVENTION

It is therefore an object of the present disclosure to provide a process for the preparation of a solid catalyst component for the (co)polymerization of CH₂=CHR olefins, in which R is hydrogen or hydrocarbyl radical with 1-12 carbon atoms, comprising a Ti compound and optionally an electron donor on a Mg chloride based support, said process comprising one or more steps (a) carried out at a temperature ranging from 0 to 150°C in which a Mg based compound of formula (MgClₘX₂₋ₘ)·nLB, in which m ranges from 0 to 2, n ranges from 0 to 6, X is, independently halogen, R¹, OR¹, -OCOR¹ or O-C(O)-OR¹ group, in which R¹ is a C₁-C₂₀ hydrocarbon group, and LB is a Lewis base, is reacted with a liquid medium comprising a Ti compound, having at least a Ti-Cl bond, in an amount such that the Ti/Mg molar ratio is greater than 3, and at least one step (b) in which the solid particles coming from (a) are suspended in a liquid medium comprising hydrocarbons at a temperature ranging from 10 to 100°C, said process being characterized by the fact that at least one of said steps (a) and/or (b) is carried out in the presence of 0.2 to 20.0% by weight, with respect to the amount of Mg compound, of particles of a solid compound containing more than 50% by weight of SiO₂ units and having average particle size ranging from 1 to 100 µm and preferably ranging from 1 to 30 µm.

### DETAILED DESCRIPTION OF THE INVENTION

Preferably, the solid compound containing more than 50% by weight of SiO₂ units is selected from silica, silicates and diatomaceous earth. Among silicates, particularly preferred are phyllosilicates like talc. Preferred type of silica is the hydrophilic silica, *i.e.,* silica that has not been modified to make it hydrophobic. Also, the use of diatomaceous earth is preferred. Particularly preferred is the use of diatomaceous earth commercialized under the name Celite^{®}.

The amount of solid compound containing more than 50% by weight of SiO₂ units preferably ranges from 0.5 to 10% by weight, and more preferably from 0.5 to 5% by weight with respect to the amount of Mg compound in step (a).

In a particular embodiment, the solid compound containing more than 50% by weight of SiO₂ units is present in step (a).

The average particle size is defined as the P50 value obtained from the determination carried out according to the procedure set forth in the experimental section. In particular, the determination is carried out on powder samples free from aggregates have been obtained by preliminarly subjecting the powder to an ultrasound treatment.

Preferably, step (a) is carried out by suspending the solid compound containing more than 50% by weight of SiO₂ units, and the Mg compound in the liquid medium comprises a titanium compound of formula Ti(OR¹)_{q-y}Cl_{y}, where q is the valence of titanium, y is a number between 1 and q and R¹ is a C1-C20 hydrocarbon group.

Among them, particularly preferred are titanium polyhalogenated compounds such as titanium tetrahalides or halogenalcoholates. Preferred specific titanium compounds are TiCl₄ and Ti(OEt)Cl₃.

The liquid medium comprising the Ti compound can be a mixture of the Ti compound in another liquid diluent. Preferred diluents are hydrocarbons, optionally chlorinated, that are liquid at room temperature. In a very preferred embodiment, the liquid medium consists of the liquid titanium compound.

The magnesium based compound used as a starting compound in the first of the one or more steps (a) is preferably selected among adducts of the general formula MgCl₂•nR¹OH, where n is a number between 0.1 and 6, and R¹ is a hydrocarbon radical having 1-18 carbon atoms. Preferably, n ranges from 1 to 5 and more preferably from 1.5 to 4.5. In a preferred embodiment, R¹ is ethyl.

The adduct can be suitably prepared by mixing alcohol and magnesium chloride, operating under stirring conditions at the melting temperature of the adduct (100-130°C). Then, the adduct is mixed with an inert hydrocarbon immiscible with the adduct, thereby creating an emulsion which is quickly quenched, causing the solidification of the adduct in the form of spherical particles. Examples of spherical adducts prepared according to this procedure are described in US 4,399,054 and US 4,469,648.

Another useable method for the spherulization process is the spray cooling method described, for example, in US 5,100,849 and US 4,829,034. Adducts having the desired final alcohol content can be obtained by directly using the selected amount of alcohol during the adduct preparation.

The above mentioned adduct can be directly reacted with a Ti compound or it can be previously subjected to thermal controlled dealcoholation (80-130°C) so as to obtain an adduct in which the number of moles of alcohol is lowered and its porosity increased. When the dealcoholation is carried out, the number of moles of alcohol per mole of Mg can be reduced to less than 3, preferably between 0.1 and 2.5.

The reaction between the Mg based compound, in particular the MgCl₂-alcohol adduct and the Ti compound, can be carried out by suspending the Mg based compound and the solid compound containing more than 50% by weight of SiO₂ units in large excess of cold TiCl₄ (for example 0°C). The mixture is heated up to a temperature ranging from 60-140°C and kept at this temperature for 0.1-4 hours, preferably 0.5-2 hours.

After the reaction time has ended, stirring in step (a) is discontinued and the solid particles are allowed to settle. After the settling is complete, the liquid phase is removed. Indication of complete settling can be the result of observing the liquid phase above the solid phase becoming clear. Also, a more precise indication may come by detecting, at regular times, the amount of light passing through the liquid phase using proper light detectors. When the amount of light passing through the liquid phase does not increase anymore, it can be concluded that settling process is complete. In the case of very dark suspensions, an alternative method can be used based on developing a learning curve by consistently siphoning the liquid phase at the same height from the bottom of the reactor, but after increasing times, and then detecting the amount of solid particles removed together with the liquid. When the amount is practically negligible, the settling is considered complete. The use of the solid compound containing more than 50% by weight of SiO₂ units helps in reaching the lowest amount of solid particles removed with the liquid in a shorter time.

The reaction step (a) can be repeated one or more times under identical or different conditions. For example, the temperature and duration of treatment can be changed. In a preferred embodiment, the number of steps (a) is comprised between 1 and 3.

In repeating step (a), adding fresh solid compound containing more than 50% by weight of SiO₂ units is possible. However, a preferred embodiment involves adding said compound in the first of a series of step (a) and preferably not adding it in step (b).

If used, the electron donor compound can be added in the desired ratios during one or more of the reaction steps (a) between the Mg based compound and the liquid Ti compound.

Preferably, the electron donor compound is added at least during the first step (a) of the reaction between the Mg based compound and the Ti compound. In some cases, such a treatment can be repeated one or two additional times.

In another embodiment, the electron donor compound, as described in WO2004/106388, can be added as a fresh reactant to the solid intermediate catalyst component obtained by the above described reaction between the adduct and the Ti compound.

At the end of the last step (a), the solid catalyst component is subjected to step (b) according to which washings with hydrocarbon solvents are carried out preferably until chloride ions are no longer detectable by potentiometric titration

The resulting solid is suspended in the hydrocarbon solvent and stirred at a temperature ranging from 10 to 100°C for a period of time ranging from 1 minute to 1 hour. If not added in step (a), the solid compound containing more than 50% by weight of SiO₂ units can be added, with the same methodology and amount, in step (b).

The particles of the final solid catalyst component may have a spherical morphology and an average diameter ranging between 5 and 150 µm, preferably from 20 to 100 µm and more preferably from 30 to 90 µm. As particles having spherical morphology, it is intended that the ratio between the greater axis and the smaller axis is equal to or lower than 1.5, and preferably lower than 1.3.

In general, the amount of Mg preferably ranges from 8 to 30% by weight, more preferably from 10 to 25% by weight with respect to the total weight of solid catalyst component.

The amount of Ti can range from 0.5 to 5% by weight and more preferably from 0.7 to 3% by weight with respect to the total weight of solid catalyst component.

When used, the internal electron donor is selected from the group consisting of ethers, amines, silanes, carbamates, ketones, esters of aliphatic acids, alkyl and aryl esters of optionally substituted aromatic mono or polycarboxylic acids, diol derivatives chosen among monoester monocarbamates and monoester monocarbonates, or mixtures thereof.

When the internal donor is selected from alkyl and aryl esters of optionally substituted aromatic polycarboxylic acids, preferred donors are the esters of phthalic acids. Preferred esters of aliphatic acids are selected from malonic, glutaric, maleic and succinic acids. Specific examples of such esters are n-butylphthalate, di-isobutylphthalate, and di-n-octylphthalate.

Preferably, the ethers can be selected from the 1,3 diethers of the formula (I): 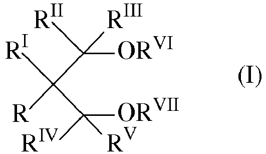 wherein R, R^{I}, R^{II}, R^{III}, R^{IV} and R^{V} are equal to or different from each other, and are hydrogen or hydrocarbon radicals having from 1 to 18 carbon atoms; and R^{VI} and R^{VII} are equal to or different from each other, and have the same meaning of R-R^{V} except that R^{VI} and R^{VII} cannot be hydrogen; one or more of the R-R^{VII} groups can be linked to form a cycle. The 1,3-diethers in which R^{VI} and R^{VII} are selected from C₁-C₄ alkyl radicals are particularly preferred.

It is also possible to use mixtures of the above mentioned donors. Specific mixtures are those constituted by esters of succinic acids and 1,3-diethers as disclosed in WO2011/061134.

In general, the final amount of electron donor compound in the solid catalyst component may range from 0.5 to 40 wt% by weight, preferably in the range from 1 to 25 wt%, with respect to the total weight of the solid catalyst component.

The solid catalyst component obtained according to the present disclosure may show a surface area (as determined by the Brunauer-Emmett-Teller (B.E.T.) method) ranging between 20 and 500 m²/g and preferably between 50 and 400 m²/g, and a total porosity (as determined by the B.E.T. method) greater than 0.2 cm³/g, preferably between 0.3 and 0.6 cm³/g. The porosity (Hg method) due to pores with radius up to 1 µm, may range from 0.3 to 1.5 cm³/g, preferably from 0.45 to 1 cm³/g.

The solid catalyst component preferably has an average particle size ranging from 5 to 120 µm, and more preferably from 10 to 100 µm.

The process of the present disclosure incorporates the solid compound containing more than 50% by weight of SiO₂ units into the solid catalyst component without affecting the catalyst performance. Hence, there would advantageously be no need to remove it from the catalyst powder.

The solid catalyst component prepared according to the process of the present disclosure is converted into catalyst for the polymerization of olefins by reacting it with organoaluminum compounds.

The organoaluminum compound is preferably chosen from the trialkyl aluminum compounds such as, for example, triethylaluminum, triisobutylaluminum, tri-n-butylaluminum, tri-n-hexylaluminum, and tri-n-octylaluminum. It is also possible to use alkylaluminum halides, alkylaluminum hydrides or alkylaluminum sesquichlorides, such as AlEt₂Cl and Al₂Et₃Cl₃, optionally in mixture with the above cited trialkylaluminums.

The Al/Ti ratio is greater than 1, and may range from 50 to 2000, preferably from 50 to 500.

Optionally, an external electron-donor compound can be used. It is preferably selected from silicon compounds, ethers, esters, amines, heterocyclic compounds and 2,2,6,6-tetramethylpiperidine, and ketones. Another class of preferred external donor compounds is that of silicon compounds of the general formula (R⁶)ₐ(R⁷)_{b}Si(OR⁸)_{c}, where a and b are integers from 0 to 2, c is an integer from 1 to 4 and the sum of (a+b+c) is 4; and R⁶, R⁷, and R⁸, are alkyl, cycloalkyl or aryl radicals with 1-18 carbon atoms optionally containing heteroatoms. Particularly preferred are the silicon compounds in which a is 1, b is 1, and c is 2, at least one of R⁶ and R⁷ is selected from branched alkyl, cycloalkyl or aryl groups with 3-10 carbon atoms optionally containing heteroatoms, and R⁸ is a C₁-C₁₀ alkyl group, in particular a methyl group. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, and methyl(3,3,3-trifluoro-n-propyl)dimethoxysilane. Moreover, the silicon compounds in which a is 0 and c is 3, R⁷ is a branched alkyl or cycloalkyl group, optionally containing heteroatoms, and R⁸ is methyl are also preferred. Examples of such preferred silicon compounds are cyclohexyltrimethoxysilane, t-butyltrimethoxysilane, and thexyltrimethoxysilane.

The external electron donor compound is used in such an amount to give a molar ratio between the organoaluminum compound and said external electron donor compound of from 0.1 to 500, preferably from 1 to 300, and more preferably from 3 to 100.

The catalyst prepared according to the present disclosure can be used in a process for the (co)polymerization of CH₂=CHR olefins, in which R is hydrogen or a hydrocarbyl radical with 1-12 carbon atoms.

The polymerization process can be carried out according to available techniques, for example slurry polymerization using an inert hydrocarbon solvent as a diluent, or bulk polymerization using the liquid monomer (for example, propylene) as a reaction medium. Moreover, it is possible to carry out the polymerization process in gas-phase operating in one or more fluidized or mechanically agitated bed reactors.

The polymerization is carried out at a temperature of from 20 to 120°C, preferably from 40 to 80°C. When the polymerization is carried out in gas-phase the operating pressure may range between 0.5 and 5 MPa, preferably between 1 and 4 MPa. In the bulk polymerization the operating pressure may range between 1 and 8 MPa, preferably between 1.5 and 5 MPa.

The following examples are given in order to better illustrate the disclosure without limiting it.

### EXAMPLES

### Determination of Mg, Ti

The determination of Mg and Ti content in the solid catalyst component has been carried out via inductively coupled plasma (ICP) emission spectroscopy on "I.C.P Spectrometer ARL Accuris".

The sample was prepared by analytically weighing, in a "Fluxy" platinum crucible, 0.1 to 0.3 grams of catalyst and 2 grams of lithium metaborate/tetraborate (1/1 mixture). After addition of some drops of potassium iodide (KI) solution, the crucible was inserted in a "Claisse Fluxy" apparatus for the complete burning. The residue was collected with a 5% v/v HNO₃ solution and then analyzed via ICP at the following wavelengths: magnesium, 279.08 nm; titanium, 368.52 nm.

### Determination of internal electron donor content

The determination of the content of internal donor in the solid catalytic compound was done through gas chromatography. The solid component was dissolved in acetone, an internal standard was added, and a sample of the organic phase was analyzed in a gas chromatograph, to determine the amount of donor present at the starting catalyst compound.

### Determination of X.I.

2.5 g of polymer and 250 ml of *o*-xylene were placed in a round-bottomed flask equipped with a cooler and a reflux condenser and kept under nitrogen. The resulting mixture was heated to 135°C and was kept under stirring for about 60 minutes. The final solution was allowed to cool to 25°C under continuous stirring, and the insoluble polymer was then filtered. The filtrate was then evaporated in a nitrogen flow at 140°C to reach a constant weight. The content of said xylene-soluble fraction is expressed as a percentage of the original 2.5 grams and then, by difference, the xylene insolubility percentage (X.I. %).

### Determination of Bulk Density (BDP)

Determined using DIN-53194.

### Melt flow rate (MIL)

The melt flow rate (MIL) of the polymer was determined according to ISO 1133 (230°C, 2.16 Kg).

### Average Particle Size

Determined by a method based on the principle of the optical diffraction of monochromatic laser light with the "Malvern Instruments 2000" apparatus. The average size is given as P50. P10 and P90 are also determined with this method.

The Malvern Mastersizer 2000 particle size analyzer is divided into three units:
1) an optical unit; Optical core unit for measurements of solids of sizes ranging from 0,02 to 2000µ, equipped with two laser beam sources: red He/Ne laser, power 5mw, wave length 633 nm., blue (diode) laser, wave length 450nm.
2) a sampling Unit; Hidro 2000S automatic Sampling Unit for volumes between 50 and 120 ml, operating with internal capacity, centrifuge pump, stirrer and ultrasound probe with 40W power output.
3) a PC console; Portable LG Pentium series, using Malvern Professional software for Windows 2000 or NT. Method of data elaboration using Mie optics theory (Refractive Index for sample =1.596; Refractive Index for n-heptane =1.39).

### Method description

For the measurements described herein n-heptane (plus 2 g/l antistatic Span 80) is used as dispersing agent.

The Measuring cell is loaded with dispersing agent, while pump/agitator speed is set up to 2205 RPM. Background measurement is then taken. Then sample is loaded, by using a dedicated loading mean for solids or slurries. A that point, before being subject to PS Determination, the sample undergoes 30 seconds of ultrasound treatment. After that, the measurement is taken.

### General procedure for the polymerization of propylene for catalyst containing 9,9-bis(methoxymethyl)fluorene

A 4-liter steel autoclave equipped with a stirrer, pressure gauge, thermometer, catalyst feeding system, monomer feeding lines and thermostating jacket, was purged with a nitrogen flow at 70°C for one hour. A suspension containing 75 ml of anhydrous hexane, 0.6 g of triethyl aluminum (AlEt₃, 5.3 mmol) and 0.006 to 0.010 g of solid catalyst component, previously precontacted for 5 minutes with 10 wt% of total AlEt₃, was charged. The autoclave was closed and the desired amount of hydrogen was added (1250cc). Then, under stirring, 1.2 kg of liquid propylene was fed. The temperature was raised to 70°C in about 10 minutes and the polymerization was carried out at this temperature for 2 hours. At the end of the polymerization, the non-reacted propylene was removed; the polymer was recovered and dried at 70°C under vacuum for 3 hours. The resulting polymer was weighed and characterized.

### General procedure for the polymerization of propylene for catalyst containing di-isobutyl phthalate

A 4-liter steel autoclave equipped with a stirrer, pressure gauge, thermometer, catalyst feeding system, monomer feeding lines and thermostatic jacket, was purged with a nitrogen flow at 70°C for one hour. A suspension containing 75 ml of anhydrous hexane, 0.76 g of AlEt₃ (6.66 mmol), 0.33 mmol of cyclohexylmethyldimethoxysilane as an external electron donor, and 0.006 to 0.010 g of solid catalyst component, previously precontacted for 5 minutes, was charged. The autoclave was closed and the desired amount of hydrogen was added (2000cm³). Then, under stirring, 1.2 kg of liquid propylene was introduced. The temperature was raised to 70°C in about 10 minutes and the polymerization was carried out at this temperature for 2 hours. At the end of the polymerization, the non-reacted propylene was removed; the polymer was recovered and dried at 70°C under vacuum for 3 hours. The resulting polymer was weighed and characterized.

### General procedure for the preparation of MgCl₂•(EtOH)ₘ adducts.

An initial amount of microspheroidal MgCl₂·2.8C₂H₅OH was prepared according to the method described in Example 2 of USP 4,399,054. The resulting adduct had an average particle size of 25 µm.

### Example 1

Preparation of a 9,9-bis(methoxymethyl)fluorene containing solid catalyst component: Into a 2.0 L round bottom glass reactor, equipped with mechanical stirrer, cooler and thermometer, 1.0 L of TiCl4 was introduced at room temperature under a nitrogen atmosphere. After cooling to -5°C, while stirring, 50 g of microspherical complex of MgCl2 and EtOH (prepared as disclosed in the general procedure) were introduced. After that, 0.5 g of Celite577 fine (commercial product from Sigma Aldrich) having P50 of 22.4 µm were also added into the reactor. The temperature was then raised from -5°C up to 40°C and when this temperature was reached, 9,9-bis(methoxymethyl)fluorene, used as an internal electron donor, was introduced in such an amount to produce a Mg/9,9-bis(methoxymethyl)fluorene molar ratio of 20.

At the end of the addition, the temperature was increased up to 100°C and maintained at this value for 30 minutes. Thereafter, stirring was stopped, and the solid product was allowed to settle for a fixed time of 7 minutes. Then the supernatant liquid was siphoned off, leaving a fixed residual volume in the reactor of 300 cm³, while maintaining the temperature at 75°C. After the supernatant was removed, fresh TiCl₄ and 9,9-bis(methoxymethyl)fluorene were added to restore 1 L of total volume and to keep a Mg/9,9-bis(methoxymethyl)fluorene molar ratio of 5. The whole slurry mixture was then heated at 109°C and kept at this temperature for 30 minutes. Once again the stirring was interrupted; the solid product was allowed to settle and the supernatant liquid was siphoned off, while maintaining the temperature at 109°C. Also in this case, sedimentation time and slurry suspension residual volume were fixed as in the first treatment stage (7 minutes and 300 cm³). A third treatment in fresh TiCl₄ (1 L of total volume) was repeated, keeping the mixture under agitation at 109°C for 15 minutes, and then the supernatant liquid was siphoned off. Sedimentation time and slurry suspension residual volume were fixed as in the first treatment stage (7 minutes and 300 cm³).

The solid was washed with anhydrous *i*-hexane five times (5 × 1.0 L) at 50°C and one time (1.0 1) at room temperature. Also, during the *i*-hexane washings, the sedimentation time was fixed, as was the volume of liquid that was siphoned off in each step.

The solid was finally dried under vacuum, weighted and analyzed.

Catalyst composition: Mg=12.5 wt%; Ti=3.7 wt%; I.D.=20.7 wt%; P50= 30 µm.

From the mass balance it was possible to calculate that 93 wt% of initial magnesium was recovered.

### Example 2

The same procedure as in Example 1 was carried out, except that 0.3 g of Celite577 fines were added into the reactor.

Catalyst composition: Mg=11.9 wt%; Ti=3.7 wt%; I.D.= 19.5 wt%; P50= 28 µm. From the mass balance it was possible to calculate that 84 wt% of initial magnesium was recovered.

### Comparative Example 3

The same procedure as in Example 1 was carried out with the difference that Celite577 fine was not added into the reactor.

Catalyst composition: Mg=12.8 wt%; Ti=3.8 wt%; I.D.=20.4 wt%; P50= 33 µm. From the mass balance it was possible to calculate that 59 wt% of initial magnesium was recovered.

### Example 4

The catalysts containing 9,9-bis(methoxymethyl)fluorene as an internal electron donor obtained in the Examples 1 and 2 and Comparative Example 3 were tested in bulk polymerization according to the general procedure reported in the description. Results are reported in Table 1.

**Table 1**

| Example | ACTIVITY Kg/g | XI (%) | MIL g/10' | BDP (g/cm³) |
|---|---|---|---|---|
| 1 | 86 | 97.6 | 5.1 | 0.486 |
| 2 | 86 | 97.7 | 5.0 | 0.432 |
| Comp. 3 | 85 | 97.9 | 4.9 | 0.460 |

### Example 5

Into a 0.5 L round bottom jacketed glass reactor, equipped with a mechanical stirrer, cooler circuit and a thermometer, 250 cm³ of TiCl₄ were introduced at room temperature under a nitrogen atmosphere. After cooling to -0°C, under stirring, 13.5 g of microspherical MgCl₂-EtOH adduct were prepared as disclosed in the general procedure, in which the EtOH content was lowered to about 45 wt% by dealcoholation in a nitrogen flow.

After that, 0.135 g of Celite577 fines (commercial product from Sigma Aldrich) were added to the slurry. The temperature was then raised from -0°C up to 40°C in about 20 min. When the temperature of 40°C was reached, 9,9-bis(methoxymethyl)fluorene, used as an internal electron donor, was introduced in such an amount to produce a Mg/9,9-bis(methoxymethyl)fluorene molar ratio of 5.

At the end of the addition, the temperature was increased to 100°C in about 60 min and maintained at this value for 30 minutes under stirring.

The whole slurry in this experimental condition was completely dark.

A lamp was positioned back in the middle of glass reactor. No light was visible to the observer looking in front of the reactor in these conditions.

Thereafter, stirring was stopped, and watching a recorded video, the solid product sedimentation time was estimated observing the appearance of the back light across the dark slurry phase becoming transparent on time. The run was repeated several times in order to generate a reliable statistical basis. In the end, solid sedimentation under the above conditions was completed in 3 minutes.

### Example 6

The same procedure of Example 5 was carried out but instead of Celite577 fine, 0.13 g of Gasil AB735 silica (P50 24 µm), commercially available from PQ Corporation, was used. The sedimentation time (measured according to Ex. 5) was 3 minutes.

### Example 7

The same procedure of Example 5 was carried out but instead of Celite577 fine, 0.13g of talc (Sigma Aldrich Product#243604) having P50 of 9 µm was used. The sedimentation time (measured according to Ex. 5) was 3 minutes and 15 seconds.

### Example 8

The same procedure of Example 5 was repeated but instead of Celite577, 0.13 grams of Silica Gasil AB200DF silica having P50 of 8 µm, commercially available from PQ Corporation, was used. A quicker, complete sedimentation lasting 2 minutes and 15 seconds (measured according to Ex. 5) was obtained.

### Comparative Example 9

The same procedure of Example 5 was carried out but instead of Celite577 fine, in this case 0.14 g of Carboxen 1000 (Specialty Carbon Adsorbent), sold by Supelco Analytical - Sigma Aldrich, was used. A longer time (4 minutes and 50 seconds) was needed to achieve the desired product sedimentation detected according to the method of Ex. 5.

### Comparative Example 10

The same procedure of Example 5 was carried out but no other additive was loaded after the introduction of the internal donor. The sedimentation time (measured according to Ex. 5) was 4 minutes and 20 seconds.

### Example 11: Sedimentation in hydrocarbon slurry

Into a 2.0 L round bottom calibrated glass reactor, equipped with a mechanical stirrer, 1.9 L of iso-hexane was introduced at room temperature under a nitrogen atmosphere. Thereafter, a catalyst prepared as disclosed in Comparative Example 3 was introduced in order to have a solid concentration of 41 g/L under stirring. At room temperature, the catalyst slurry in hydrocarbon was agitated at 350 rpm for 10 minutes. Then the stirrer was stopped and the black solid slowly and progressively started to settle, leaving a clear solvent on the upper part.

The front of the solid moved towards the bottom of the reactor, and the observer estimated the sedimentation rate by measuring the distance covered by the spherical catalyst over time. Then, such an amount of Celite577 (Sigma Aldrich; Celite577/catalyst = 1 wt%) was introduced into the reactor, and the slurry was further stirred for 10 minutes. Then the stirring was stopped and the observer measured the sedimentation rate. The slurry of catalyst was stirred for an additional 50 minutes, and the sedimentation rate measured.

This method was sequentially repeated in order to evaluate both the effect of the amount of Celite577 and the mixing time with respect to the sedimentation rate. The results are reported in Table 2, where the mixing time refers to the total mixing time at the specific amount of sedimentation aid.

### Example 12

The same procedure of Example 11 was repeated but talc (Sigma Aldrich Product#2436040) was used instead of Celite577 (same weight percent ratio). The results are reported in Table 2

### Example 13

The same procedure of Example 11 was repeated but HDK^{®} T30 hydrophilic pyrogenic silica (Wacker Silicones) having P50 of 23 µm, was used instead of Celite577 (same weight percent ratio). The results are reported in Table 2.

### Example 14

The same procedure of Example 11 was repeated but Silica Fluka (Sigma Aldrich Product#S5631) having P50 of 4 µm was used instead of Celite577 (same weight percent ratio). The results are reported in Table 2.

### Example 15

The same procedure of Example 11 was repeated but Gasil AB735 silica (PQ Corporation) was used instead of Celite577 (same weight percent ratio). The results are reported in Table 2.

### Example 16

The same procedure of Example 11 was repeated but Gasil AB200DF silica (PQ Corporation) was used instead of Celite577 (same weight percent ratio). The results are reported in Table 2.

### Comparative Example 17

The same procedure of Example 11 was repeated but graphite (Sigma Aldrich Product# 282863) was used instead of Celite577 (same weight percent ratio). The results are reported in Table 2.

### Comparative Example 18

The same procedure of Example 11 was repeated but a sample of CaF2 (Sigma Aldrich Product# 449717) was used instead of Celite577 (same weight percent ratio). The results are reported in Table 2.

### Comparative Example 19

The same procedure of Example 11 was repeated but a sample of Cu-pthalocyanine (Sigma Aldrich Product# 546682) was used instead of Celite577 (same weight percent ratio). The results are reported in Table 2.

### Comparative Example 20

The same procedure of Example 11 was repeated but a sample of zirconium hydrogen phosphate (Sunshine Factory Co., Ltd) was used instead of Celite577 (same weight percent ratio). The results are reported in Table 2.

### Comparative Example 21

The same procedure of Example 11 was repeated but the sedimentation rates were recorded without the addition of any additional compounds. The results are reported in Table 2.

**TABLE 2**

| Example | Additive (wt%) | Mixing time (min) | Sed. Rate (cm/min) |
|---|---|---|---|
| 11 | None | 10 | 10 |
| 11 | Celite577 (1%) | 10 | 30 |
| 11 | Celite577 (1%) | 60 | 35 |
| 11 | Celite577 (2%) | 10 | 40 |
| 12 | None | 10 | 10 |
| 12 | Talc (1%) | 10 | 10 |
| 12 | Talc (1%) | 60 | 26 |
| 12 | Talc (2%) | 10 | 44 |
| 13 | None | 10 | 9 |
| 13 | Silica T30 (0.5%) | 10 | 18 |
| 13 | Silica T30 (0.5%) | 60 | 22 |
| 13 | Silica T30 (1%) | 10 | 20 |
| 13 | Silica T30 (1%) | 60 | 22 |
| 13 | Silica T30 (1.5%) | 10 | 22 |
| 13 | Silica T30 (1.5%) | 60 | 37 |
| 13 | Silica T30 (2%) | 10 | 55 |
| 13 | Silica T30 (2%) | 60 | 55 |
| 14 | None | 10 | 9 |
| 14 | Silica Fluka (0.5%) | 10 | 29 |
| 14 | Silica Fluka (0.5%) | 60 | 36 |
| 14 | Silica Fluka (1%) | 10 | 48 |
| 14 | Silica Fluka (1%) | 60 | 47 |
| 14 | Silica Fluka (1.5%) | 10 | 50 |
| 14 | Silica Fluka (1.5%) | 60 | 47 |
| 15 | None | 10 | 10 |
| 15 | Silica AB735 (0.5%) | 10 | 16 |
| 15 | Silica AB735 (0.5%) | 60 | 48 |
| 15 | Silica AB735 (1%) | 10 | 51 |
| 15 | Silica AB735 (1%) | 60 | 48 |
| 15 | Silica AB735 (1.5%) | 10 | 48 |
| 15 | Silica AB735 (1.5%) | 60 | 43 |
| 15 | Silica AB735 (2%) | 10 | 39 |
| 16 | None | 10 | 10 |
| 16 | Silica AB200DF (0.5%) | 10 | 10 |
| 16 | Silica AB200DF (0.5%) | 60 | 15 |
| 16 | Silica AB200DF (1%) | 10 | 29 |
| 16 | Silica AB200DF (1%) | 60 | 44 |
| 16 | Silica AB200DF (1.5%) | 10 | 50 |
| 16 | Silica AB200DF (1.5%) | 60 | 50 |
| 16 | Silica AB200DF (2%) | 10 | 55 |
| 16 | Silica AB200DF (2%) | 60 | 55 |
| Comp. EX17 | None | 10 | 9 |
| Comp. EX17 | Graphite (0.5%) | 10 | 18 |
| Comp. EX17 | Graphite (0.5%) | 60 | 18 |
| Comp. EX17 | Graphite (1%) | 10 | 20 |
| Comp. EX17 | Graphite (1%) | 60 | 16 |
| Comp. EX17 | Graphite (1.5%) | 10 | 12 |
| Comp. EX17 | Graphite (1.5%) | 60 | 15 |
| Comp. EX17 | Graphite (2%) | 10 | 15 |
| Comp. EX17 | Graphite (2%) | 60 | 13 |
| Comp. EX18 | None | 10 | 10 |
| Comp. EX18 | CaF₂ (0.5%) | 10 | 12 |
| Comp. EX18 | CaF₂ (0.5%) | 60 | 21 |
| Comp. EX18 | CaF₂ (1%) | 10 | 18 |
| Comp. EX18 | CaF₂ (1%) | 60 | 19 |
| Comp. EX18 | CaF₂ (1.5%) | 10 | 15 |
| Comp. EX18 | CaF₂ (1.5%) | 60 | 14 |
| Comp. EX18 | CaF₂ (2%) | 10 | 15 |
| Comp. EX18 | CaF₂ (2%) | 60 | 12 |
| Comp. EX19 | None | 10 | 9 |
| Comp. EX19 | Cu-Phthalc. (0.5%) | 10 | 12 |
| Comp. EX19 | Cu-Phthalc. (0.5%) | 60 | 21 |
| Comp. EX19 | Cu-Phthalc. (1%) | 10 | 21 |
| Comp. EX19 | Cu-Phthalc. (1%) | 60 | 21 |
| Comp. EX19 | Cu-Phthalc. (1.5%) | 10 | 21 |
| Comp. EX19 | Cu-Phthalc. (1.5%) | 60 | 20 |
| Comp. EX19 | Cu-Phthalc. (2%) | 10 | 20 |
| Comp. EX19 | Cu-Phthalc. (2%) | 60 | 21 |
| Comp. EX20 | None | 10 | 9 |
| Comp. EX20 | Zr(HPO₄)₂ (0.5%) | 10 | 11 |
| Comp. EX20 | Zr(HPO₄)₂ (0.5%) | 60 | 15 |
| Comp. EX20 | Zr(HPO₄)₂ (1%) | 10 | 13 |
| Comp. EX20 | Zr(HPO₄)₂ (1%) | 60 | 18 |
| Comp. EX20 | Zr(HPO₄)₂ (1.5%) | 10 | 21 |
| Comp. EX20 | Zr(HPO₄)₂ (1.5%) | 60 | 25 |
| Comp. EX20 | Zr(HPO₄)₂ (2%) | 10 | 26 |
| Comp. EX20 | Zr(HPO₄)₂ (2%) | 60 | 26 |
| Comp. EX21 | None | 10 | 9 |
| Comp. EX21 | None | 20 | 11 |
| Comp. EX21 | None | 80 | 25 |
| Comp. EX21 | None | 90 | 25 |
| Comp. EX21 | None | 150 | 24 |
| Comp. EX21 | None | 210 | 21 |
| Comp. EX21 | None | 220 | 23 |
| Comp. EX21 | None | 280 | 21 |

### Example 22

The catalysts containing 9,9-bis(methoxymethyl)fluorene as an internal electron donor obtained in the Examples 11 to 16 and Comparative Examples 17 to 21 were tested in bulk polymerization according to the general procedure reported in the description. The results are reported in Table 3.

**TABLE 3**

| Example | Additive (wt%) | Activity Kg/g | XI (%) | MIL | BDP (g/cc) |
|---|---|---|---|---|---|
| 11 | None | 99 | 96.5 | 6.0 | 0.488 |
| 11 | Celite577 (2%) | 92 | 96.6 | 4.1 | 0.503 |
| 12 | Talc (2%) | 87 | 96.9 | 5.4 | 0.487 |
| 13 | Silica T30 (2%) | 99 | 96.3 | 4.9 | 0.502 |
| 14 | Silica Fluka (1.5%) | 99 | 96.2 | 5.2 | 0.493 |
| 15 | Silica AB735 (2%) | 87 | 96.9 | 6.8 | 0.512 |
| 16 | Silica AB200DF (2%) | 82 | 97.0 | 3.6 | 0.505 |
| Comp. 19 | Cu-Phthalc. (2%) | 90 | 96.9 | 6 | 0.499 |
| Comp. 20 | Zr(HPO₄)₂ (2%) | 95 | 96.8 | 5.8 | 0.503 |
| Comp. 21 | none | 95 | 97.0 | 6.4 | 0.493 |

### Example 23

Into a 0.5 L round bottom jacketed glass reactor, equipped with a mechanical stirrer, cooler circuit and a thermometer, 250cm³ of TiCl₄ were introduced at room temperature under a nitrogen atmosphere. After cooling at -0°C, under stirring, 16 g of microspherical MgCl₂-EtOH adduct, prepared as disclosed in the general procedure, were introduced.

After that, 0.175 g of Celite577 fines (Sigma Aldrich) were added to the slurry. Keeping the same temperature under stirring, 2.5 g of di-isobutyl phthalate for use as an internal electron donor were introduced (Mg/diisobutyl phthalate = 8.0 molar).

At the end of the addition, the temperature was increased to 100°C in about 60 min and maintained at this value for 60 minutes under stirring.

The whole slurry in this experimental condition was a homogeneous, yellowish color.

A lamp was positioned in the middle back of the glass reactor to better observe the solid motion into the glass reactor.

Thereafter, stirring was stopped and, watching a recorded video, the solid product sedimentation time was estimated observing the solid level increasing on the bottom of the reactor as well as the appearance of the liquid phase, which became progressively less hazy over time. In this step, the solid sedimentation was completed in 2 minutes and 15 seconds. Then, the liquid was discharged from the bottom of the glass reactor using a flat filter. Then, fresh TiCl₄ was added to restore the initial concentration. The whole slurry mixture was then heated to 120°C and kept at this temperature for 60 minutes. Once again the stirring was interrupted, and the solid product was separated by the liquid filtering the suspension while maintaining the temperature at 120°C. A third treatment of fresh TiCl₄ was used, keeping the mixture under agitation at 120°C for 30 minutes, and then the liquid was filtered off. The solid was washed with anhydrous i-hexane five times (5 x 0.250 L) at 50°C and one time at room temperature.

The solid was finally dried under vacuum, weighted and analyzed.

Catalyst composition: Mg=17.3 wt%; Ti=3.3 wt%; I.D.=12.3 wt%; P50= 28 µm.

### Example 24

The same procedure of Example 23 was carried out but Fluka silica (Sigma Aldrich Product#S5631) was used instead of Celite577 fine. The measurement in this case was 2 minutes and 45 seconds regarding the time needed to complete the solid particles sedimentation step.

### Comparative Example 25

The same procedure of Example 23 was repeated but the sedimentation rates during this time were recorded without the addition of any further compounds. The measurement in this case showed that more than 4 minutes were needed to complete the solid particles sedimentation step.

### Example 26

The catalysts based on diisobutylphthalate as an internal electron donor obtained in Examples 23, 24 and Comparative Example 25 were tested in bulk polymerization according to the general procedure reported in the description. The results are reported in Table 4.

**Table 4**

| Example | ACTIVITY Kg/g | XI (%) | MIL |
|---|---|---|---|
| 23 | 74 | 96.8 | 10.4 |
| 24 | 76 | 96.6 | 14.7 |
| Comp. ex. 25 | 77 | 96.9 | 11.5 |

### Example 27: Sedimentation in hydrocarbon slurry

The same procedure of Example 11 was repeated, but the Ziegler-Natta catalyst used in the experiment was prepared according to Example 2 of US 6,127,304. The results are reported in Table 5.

### Example 28

The same procedure of Example 11 was repeated but talc (Sigma Aldrich Product#2436040) was used instead of Celite577 (same weight percent ratio). The results are reported in Table 5.

### Example 29

The same procedure of Example 11 was repeated but Gasil AB200DF silica (PQ Corporation) was used instead of Celite577 (same weight percent ratio). The results are reported in Table 5.

### Example 30

The same procedure of Example 11 was repeated but Gasil AB735 silica (PQ Corporation) was used instead of Celite577 (same weight percent ratio). The results are reported in Table 5.

### Example 31

The same procedure of Example 11 was repeated but Fluka silica (Sigma Aldrich Product#S5631) was used instead of Celite577 (same weight percent ratio). The results are reported in Table 5.

**Table 5**

| Example (#) | Additive (wt%) | Mixing time (min) | Sed. Rate (cm/min) |
|---|---|---|---|
| 27 | None | 10 | 20 |
| 27 | Celite577 (1%) | 10 | 30 |
| 27 | Celite577 (1%) | 60 | 33 |
| 27 | Celite577 (1.5%) | 10 | 30 |
| 27 | Celite577 (1.5%) | 60 | 34 |
| 27 | Celite577 (2%) | 10 | 35 |
| 27 | Celite577 (2%) | 60 | 35 |
| 28 | None | 10 | 19 |
| 28 | Talc (1%) | 10 | 25 |
| 28 | Talc (1%) | 60 | 30 |
| 28 | Talc (1.5%) | 10 | 30 |
| 28 | Talc (1.5%) | 60 | 32 |
| 28 | Talc (2%) | 10 | 32 |
| 28 | Talc (2%) | 60 | 33 |
| 29 | None | 10 | 16 |
| 29 | Silica AB200DF (1%) | 10 | 33 |
| 29 | Silica AB200DF (1%) | 60 | 36 |
| 29 | Silica AB200DF (1.5%) | 10 | 36 |
| 29 | Silica AB200DF (1.5%) | 60 | 36 |
| 29 | Silica AB200DF (2%) | 10 | 36 |
| 29 | Silica AB200DF (2%) | 60 | 36 |
| 30 | None | 10 | 18 |
| 30 | Silica AB735 (1%) | 10 | 29 |
| 30 | Silica AB735 (1%) | 60 | 29 |
| 30 | Silica AB735 (1.5%) | 10 | 29 |
| 30 | Silica AB735 (1.5%) | 60 | 26 |
| 30 | Silica AB735 (2%) | 10 | 25 |
| 30 | Silica AB735 (2%) | 60 | 25 |
| 31 | none | 10 | 17 |
| 31 | Silica Fluka (1%) | 10 | 30 |
| 31 | Silica Fluka (1%) | 60 | 35 |
| 31 | Silica Fluka (1.5%) | 10 | 32 |
| 31 | Silica Fluka (1.5%) | 60 | 36 |
| 31 | Silica Fluka (2%) | 10 | 36 |
| 31 | Silica Fluka (2%) | 60 | 38 |

### Example 32

The catalysts based on diisobutylphthalate as an internal electron donor obtained in Examples 27 to 31 were tested in bulk polymerization according to the general procedure reported in the description. The results are reported in Table 6 and are compared with the neat catalyst without any treatment in iso-hexane.

**Table 6**

| Example | Additive (wt%) | ACTIVITY Kg/g | XI (%) | MIL |
|---|---|---|---|---|
| 27 | Celite577 (2%) | 63 | 97.9 | 6.5 |
| 29 | Silica AB200DF (2%) | 61 | 97.9 | 6.6 |
| 30 | Silica AB735 (2%) | 48 | 97.7 | 7.5 |
| 31 | Silica Fluka (2%) | 65 | 97.7 | 9.5 |
| 32 | None | 68 | 97.8 | 7.0 |

## Claims

1. A process for the preparation of a solid catalyst component for the (co)polymerization of CH₂=CHR olefins, in which R is hydrogen or hydrocarbyl radical with 1-12 carbon atoms, comprising a Ti compound and optionally an electron donor on a Mg chloride based support, said process comprising one or more steps (a) carried out at a temperature ranging from 0 to 150°C in which a Mg based compound of formula (MgClₘX₂₋ₘ)·nLB, in which m ranges from 0 to 2, n ranges from 0 to 6, X is, independently halogen, R¹, OR¹, -OCOR¹ or O-C(O)-OR¹ group, in which R¹ is a C₁-C₂₀ hydrocarbon group, and LB is a Lewis base, is reacted with a liquid medium comprising a Ti compound, having at least a Ti-Cl bond, in an amount such that the Ti/Mg molar ratio is greater than 3 and at least one step (b) in which the solid particles coming from (a) are suspended in a liquid medium comprising a hydrocarbon at a temperature ranging from 10 to 100°C, said process being **characterized by** the fact that at least one of said steps (a) and/or (b) is carried out in the presence of 0.2 to 20.0% by weight, with respect to the amount of Mg compound, of particles of a solid compound containing more than 50% by weight of SiO₂ units and having average particle size ranging from 1 to 100 µm.

2. The process of claim 1 in which the said solid compound containing more than 50% by weight of SiO₂ units has average particle size ranging from 1 to 30 µm.

3. The process of claim 1 in which the solid compound containing more than 50% by weight of SiO₂ units is selected from silica, silicates and diatomaceous earth.

4. The process according to claim 1 in which the said solid compound containing more than 50% by weight of SiO₂ units is selected from diatomaceous earth.

5. The process according to claim 1 in which the said solid compound containing more than 50% by weight of SiO₂ units is talc.

6. The process according to claim 1 in which the amount of solid compound containing more than 50% by weight of SiO₂ units ranges from 0.5 to 10% by weight with respect to the amount of Mg compound used in step (a).

7. The process according to claim 1 in which the Mg based compound in the one or more steps (a) is selected among adducts of the general formula MgCl₂**•**nR¹OH, where n is a number between 0.1 and 6, and R¹ is a hydrocarbon radical having 1-18 carbon atoms.

8. The process according to claim 7 in which n ranges from 1 to 5 and R¹ is ethyl.

9. The process according to claim 1 in which the reaction temperature is from 60 to 140°C.

10. The process of claim 1 in which the number of steps (a) is between 1 and 4.

11. The process of claim 1 in which the solid compound containing more than 50% by weight of SiO₂ units is present in step (a).

12. The process of claim 1 further comprising in step (a) the use of an electron donor compound chosen from the group consisting of alkyl and aryl esters of optionally substituted aromatic polycarboxylic acids, esters of malonic acids, esters of glutaric acids, esters of maleic acids, esters of succinic acids, diol derivatives chosen from dicarbamates, monoesters monocarbamates and monoesters monocarbonates, and 1,3-diethers of the formula: 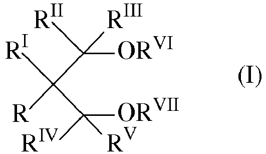 wherein R, R^{I}, R^{II}, R^{III}, R^{IV} and R^{V} are equal to or different from each other, and are hydrogen or hydrocarbon radicals having from 1 to 18 carbon atoms, and R^{VI} and R^{VII} are equal to or different from each other, and have the same meaning of R-R^{V} except that R^{VI} and R^{VII} cannot be hydrogen; and one or more of the R-R^{VII} groups may be linked to form a cycle.

13. The process according to claim 11 in which the internal donor is used at least in the first step (a).

14. The process according to claim 1 in which the solid compound containing more than 50% by weight of SiO₂ units is added in step (b).

15. The process of claim 14 in which the said solid compound containing more than 50% by weight of SiO₂ units is selected from diatomaceous earth.

## Patentansprüche

1. Verfahren zur Herstellung einer festen Katalysatorkomponente zur (Co)polymerisation von CH₂=CHR Olefinen, wobei R Wasserstoff oder ein Kohlenwasserstoffrest mit 1 bis 12 Kohlenstoffatomen ist, umfassend eine Ti-Verbindung und gegebenenfalls einen Elektronendonor auf einem Träger auf Mg-Chloridbasis, wobei das Verfahren einen oder mehrere Schritte (a) umfasst, der/die bei einer Temperatur im Bereich von 0 bis 150 °C durchgeführt wird/werden, wobei eine Verbindung auf Mg-Basis mit der Formel (MgClₘX₂₋ₘ)·nLB, in der m im Bereich von 0 bis 2 liegt, n im Bereich von 0 bis 6 liegt, X unabhängig Halogen, eine Gruppe R¹, OR¹, -OCOR¹ oder O-C(O)-OR¹ ist, worin R¹ eine C₁- bis C₂₀-Kohlenwasserstoffgruppe ist, und LB eine Lewis-Base ist, mit einem flüssigen Medium, das eine Ti-Verbindung mit mindestens einer Ti-Cl-Bindung umfasst, in einer Menge umgesetzt wird, so dass das Molverhältnis von Ti/Mg größer als 3 ist, und mindestens einen Schritt (b) umfasst, in dem die aus (a) kommenden festen Partikel in einem flüssigen Medium, das einen Kohlenwasserstoff umfasst, bei einer Temperatur im Bereich von 10 bis 100 °C suspendiert werden, wobei das Verfahren durch die Tatsache gekennzeichnet ist, dass mindestens einer der Schritte (a) und/oder (b) in Gegenwart von 0,2 bis 20,0 Gew.%, bezogen auf die Menge der Mg-Verbindung, an Partikeln einer festen Verbindung durchgeführt wird, die mehr als 50 Gew.% SiO₂-Einheiten enthält und eine durchschnittliche Partikelgröße im Bereich von 1 bis 100 µm hat.

2. Verfahren nach Anspruch 1, wobei die feste Verbindung, die mehr als 50 Gew.% SiO₂-Einheiten enthält, eine durchschnittliche Partikelgröße im Bereich von 1 bis 30 µm aufweist.

3. Verfahren nach Anspruch 1, wobei die feste Verbindung, die mehr als 50 Gew.% SiO₂-Einheiten enthält, ausgewählt ist aus Silika, Silikaten und Kieselerde.

4. Verfahren nach Anspruch 1, wobei die feste Verbindung, die mehr als 50 Gew.% SiO₂-Einheiten enthält, ausgewählt ist aus Kieselerde.

5. Verfahren nach Anspruch 1, wobei die feste Verbindung, die mehr als 50 Gew.% SiO₂-Einheiten enthält, Talkum ist.

6. Verfahren nach Anspruch 1, wobei die Menge an fester Verbindung, die mehr als 50 Gew.% SiO₂-Einheiten enthält, im Bereich von 0,5 bis 10 Gew.% in Bezug auf die Menge der in Schritt (a) verwendeten Mg-Verbindung liegt.

7. Verfahren nach Anspruch 1, wobei die Verbindung auf Mg-Basis in dem einen oder den mehreren Schritten (a) ausgewählt ist aus Addukten der allgemeinen Formel MgCl₂•nR¹OH, wobei n eine Zahl zwischen 0,1 und 6 ist, und R¹ ein Kohlenwasserstoffrest mit 1 bis 18 Kohlenstoffatomen ist.

8. Verfahren nach Anspruch 7, wobei n im Bereich von 1 bis 5 liegt und R¹ Ethyl ist.

9. Verfahren nach Anspruch 1, wobei die Reaktionstemperatur 60 bis 140 °C beträgt.

10. Verfahren nach Anspruch 1, wobei die Anzahl der Schritte (a) zwischen 1 und 4 liegt.

11. Verfahren nach Anspruch 1, wobei die feste Verbindung, die mehr als 50 Gew.% SiO₂-Einheiten enthält, in Schritt (a) vorhanden ist.

12. Verfahren nach Anspruch 1, des Weiteren umfassend in Schritt (a) die Verwendung einer Elektronendonorverbindung ausgewählt aus der Gruppe bestehend aus Alkyl- und Arylestern von gegebenenfalls substituierten aromatischen Polycarbonsäuren, Estern von Malonsäuren, Estern von Glutarsäuren, Estern von Maleinsäuren, Estern von Bernsteinsäuren, Diolderivaten ausgewählt aus Dicarbamaten, Monoestermonocarbamaten und Monoestermonocarbonaten und 1,3-Diethern mit der Formel: 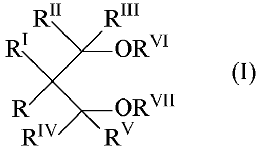 wobei R, R^{I}, R^{II}, R^{III}, R^{IV} und R^{V} gleich oder voneinander verschieden sind und Wasserstoff oder Kohlenwasserstoffreste mit 1 bis 18 Kohlenstoffatomen sind, und R^{VI} und R^{VII} gleich oder voneinander verschieden sind und die gleiche Bedeutung wie R bis R^{V} haben, außer dass R^{VI} und R^{VII} nicht Wasserstoff sein können; und wobei eine oder mehrere der Gruppen R bis R^{VII} unter Bildung eines Cyclus verknüpft sein kann bzw. können.

13. Verfahren nach Anspruch 11, wobei der interne Donor mindestens in dem ersten Schritt (a) verwendet wird.

14. Verfahren nach Anspruch 1, wobei die feste Verbindung, die mehr als 50 Gew.% SiO₂-Einheiten enthält, in Schritt (b) zugegeben wird.

15. Verfahren nach Anspruch 14, wobei die feste Verbindung, die mehr als 50 Gew.% SiO₂-Einheiten enthält, ausgewählt ist aus Kieselerde.

## Revendications

1. Procédé de préparation d'un constituant catalytique solide pour la (co)polymérisation d'oléfines CH₂=CHR, dans lesquelles R représente hydrogène ou un radical hydrocarbyle présentant 1 à 12 atomes de carbone, comprenant un composé de Ti et éventuellement un donneur d'électrons sur un support à base de chlorure de Mg, ledit procédé comprenant une ou plusieurs étapes (a) réalisées à une température située dans la plage de 0 à 150 °C, dans laquelle/lesquelles un composé à base de Mg de formule (MgClₘX₂₋ₘ)·nLB, dans laquelle m est situé dans la plage de 0 à 2, n est situé dans la plage de 0 à 6, X représente indépendamment halogène, un groupe R¹, OR¹, -OCOR¹ ou O-C(O)-OR¹, dans lesquels R¹ représente un groupe hydrocarboné en C₁-C₂₀, et LB représente une base de Lewis, est mis en réaction avec un milieu liquide comprenant un composé de Ti, présentant au moins une liaison Ti-Cl, en une quantité telle que le rapport molaire Ti/Mg est supérieur à 3, et au moins une étape (b) dans laquelle les particules solides provenant de (a) sont mises en suspension dans un milieu liquide comprenant un hydrocarbure à une température située dans la plage de 10 à 100 °C, ledit procédé étant **caractérisé en ce qu'**au moins l'une desdites étapes (a) et/ou (b) est réalisée en présence de 0,2 à 20,0 % en poids, par rapport à la quantité de composé de Mg, de particules d'un composé solide contenant plus de 50 % en poids de motifs SiO₂ et présentant une grosseur moyenne de particule située dans la plage de 1 à 100 µm.

2. Procédé selon la revendication 1, dans lequel ledit composé solide contenant plus de 50 % en poids de motifs SiO₂ présente une grosseur moyenne de particule située dans la plage de 1 à 30 µm.

3. Procédé selon la revendication 1, dans lequel le composé solide contenant plus de 50 % en poids de motifs SiO₂ est choisi parmi la silice, les silicates et les terres de diatomées.

4. Procédé selon la revendication 1, dans lequel ledit composé solide contenant plus de 50 % en poids de motifs SiO₂ est choisi parmi les terres de diatomées.

5. Procédé selon la revendication 1, dans lequel ledit composé solide contenant plus de 50 % en poids de motifs SiO₂ est le talc.

6. Procédé selon la revendication 1, dans lequel la quantité de composé solide contenant plus de 50 % en poids de motifs SiO₂ est située dans la plage de 0,5 à 10 % en poids par rapport à la quantité de composé de Mg utilisée dans l'étape (a).

7. Procédé selon la revendication 1, dans lequel le composé à base de Mg dans ladite une ou lesdites plusieurs étapes (a) est choisi parmi les produits d'addition de formule générale MgCl₂**•**nR¹OH, où n représente un nombre entre 0,1 et 6 et R¹ représente un radical hydrocarboné présentant 1 à 18 atomes de carbone.

8. Procédé selon la revendication 7, dans lequel n est situé dans la plage de 1 à 5 et R¹ représente éthyle.

9. Procédé selon la revendication 1, dans lequel la température de réaction est de 60 à 140 °C

10. Procédé selon la revendication 1, dans lequel le nombre d'étapes (a) est situé entre 1 et 4.

11. Procédé selon la revendication 1, dans lequel le composé solide contenant plus de 50 % en poids de motifs SiO₂ est présent à l'étape (a).

12. Procédé selon la revendication 1, comprenant en outre dans l'étape (a) l'utilisation d'un composé donneur d'électrons choisi dans le groupe constitué par les esters d'alkyle et d'aryle d'acides polycarboxyliques aromatiques éventuellement substitués, les esters d'acide malonique, les esters d'acide glutarique, les esters d'acide maléique, les esters d'acide succinique, les dérivés de diol choisis parmi les dicarbamates, les monocarbamates de monoesters et les monocarbonates de monoesters et les 1,3-diéthers de formule : 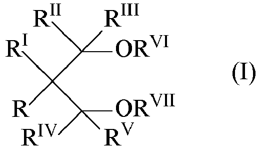 R, R^{I}, R^{II}, R^{III}, R^{IV} et R^{V} étant égaux ou différents les uns des autres et représentant hydrogène ou des radicaux hydrocarbonés présentant 1 à 18 atomes de carbone et R^{VI} et R^{VII} étant égaux ou différents l'un de l'autre et présentant la même signification de R-R^{V} sauf que R^{VI} et R^{VII} ne peuvent pas représenter hydrogène ; et un ou plusieurs des groupes R-R^{VII} peuvent être liés pour former un cycle.

13. Procédé selon la revendication 11, dans lequel le donneur interne est utilisé au moins dans la première étape (a).

14. Procédé selon la revendication 1, dans lequel le composé solide contenant plus de 50 % en poids de motifs SiO₂ est ajouté à l'étape (b).

15. Procédé selon la revendication 14, dans lequel ledit composé solide contenant plus de 50 % en poids de motifs SiO₂ est choisi parmi les terres de diatomées.
